(19) Europäisches Patentamt
European Patent Office
Office européen des brevets

(11) **EP 2 528 184 B1**

(12) **EUROPEAN PATENT SPECIFICATION**

(45) Date of publication and mention
of the grant of the patent:
**10.09.2014 Bulletin 2014/37**

(51) Int Cl.:
*H02J 3/36* *(2006.01)*     *H02J 3/38* *(2006.01)*

(21) Application number: **11167439.6**

(22) Date of filing: **25.05.2011**

(54) **Method and apparatus for controlling a DC-transmission link**

Verfahren und Vorrichtung zur Steuerung eines DC-Übertragungslinks

Procédé et appareil de contrôle d'une liaison de transmission CC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.11.2012 Bulletin 2012/48**

(73) Proprietor: **Siemens Aktiengesellschaft**
**80333 München (DE)**

(72) Inventors:
• **Jensen, Kim Hoej**
**4640 Faxe (DK)**
• **Sharma, Ranjan**
**2880 Bagsvaerd (DK)**

(56) References cited:
• **VRIONIS T D ET AL: "Control of an HVdc Link Connecting a Wind Farm to the Grid for Fault Ride-Through Enhancement", IEEE TRANSACTIONS ON POWER SYSTEMS, IEEE SERVICE CENTER, PISCATAWAY, NJ, US, vol. 22, no. 4, 1 November 2007 (2007-11-01), pages 2039-2047, XP011194267, ISSN: 0885-8950, DOI: 10.1109/TPWRS.2007.907377**
• **ANDRES E LEON ET AL: "Adaptive Control Strategy for VSC-Based Systems Under Unbalanced Network Conditions", IEEE TRANSACTIONS ON SMART GRID, IEEE, USA, vol. 1, no. 3, 1 December 2010 (2010-12-01), pages 311-319, XP011319889, ISSN: 1949-3053**

• **JUN LIANG ET AL: "Control of multi-terminal VSC-HVDC transmission for offshore wind power", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541568, ISBN: 978-1-4244-4432-8**
• **CUIQING DU ET AL: "A New Control Strategy of a VSC-HVDC System for High-Quality Supply of Industrial Plants", IEEE TRANSACTIONS ON POWER DELIVERY, IEEE SERVICE CENTER, NEW YORK, NY, US, vol. 22, no. 4, 1 October 2007 (2007-10-01), pages 2386-2394, XP011191838, ISSN: 0885-8977, DOI: 10.1109/TPWRD. 2007.899622**
• **XINGJIA YAO ET AL: "The study of VSC-HVDC transmission system for offshore wind power farm", ELECTRICAL MACHINES AND SYSTEMS, 2007. ICEMS. INTERNATIONAL CONFERENCE ON, IEEE, PI, 1 October 2007 (2007-10-01), pages 314-319, XP031197253, ISBN: 978-89-86510-07-2**
• **CUIQING DU ET AL: "Analysis of the control algorithms of voltage-source converter HVDC", POWER TECH, 2005 IEEE RUSSIA, IEEE, PISCATAWAY, NJ, USA, 27 June 2005 (2005-06-27), pages 1-7, XP031254738, ISBN: 978-5-93208-034-4**
• **DU C ET AL: "Comparison of Different Frequency Controllers for a VSC-HVDC Supplied System", IEEE TRANSACTIONS ON POWER DELIVERY, IEEE SERVICE CENTER, NEW YORK, NY, US, vol. 23, no. 4, 1 October 2008 (2008-10-01), pages 2224-2232, XP011226331, ISSN: 0885-8977, DOI: 10.1109/TPWRD.2008.921130**

- OUQUELLE H ET AL: "An average value model-based design of a deadbeat controller for VSC-HVDC transmission link", POWER&ENERGY SOCIETY GENERAL MEETING, 2009. PES '09. IEEE, IEEE, PISCATAWAY, NJ, USA, 26 July 2009 (2009-07-26), pages 1-6, XP031538731, ISBN: 978-1-4244-4241-6

**Description**

Field of invention

The present invention relates to a method and to an apparatus for controlling a DC-transmission link for transmitting electric power from a power production unit, in particular a wind turbine, connected to a AC-DC converter at a first side of the DC-transmission link to a utility grid connected to a DC-AC converter at a second side of the DC-transmission link.

Art Background

Electric energy produced in a wind farm or a wind park needs to be transmitted to a utility grid to which one or more consumers are connected to be supplied with electric energy.

The IEEE publication *Control of an HVdc Link Connecting a Wind Farm to the Grid for Fault Ride-Through Enhancement* discloses a control of an HVdc link connecting a wind farm to an electric power grid with a wind farm side converter station and a grid side converter station, a dc cable connecting the two converter stations and a control system which detects a change in the dc voltage to control the converter of the wind farm side converter station.

Power from an offshore wind power plant may be transmitted to the nearby on-land transmission system via a HVAC (high voltage alternating current) or a HVDC (high voltage direct current) transmission line. The grid code requirements of the on-land transmission system need to be fulfilled when connecting a large power plant. One of the major requirements may be the low voltage fault-ride-through, which implies that the wind power plant (WPP) needs to remain connected even when the grid voltage falls below a nominal threshold level (normally 0.9 pu, "pu" meaning per unit, i.e. a ratio of the actual value and the nominal value). The time length of the ride-through requirement, however, may differ among various power system operators.

In case of a HVAC transmission, this voltage drop in the grid is directly reflected at the terminals of the wind turbines.

A HVDC transmission system de-couples the two connecting AC systems (namely the utility grid or the power system to which the power is fed to and the WPP collector network). Therefore, the conditions at the grid end are not reflected directly at the terminals of the wind turbines. As a result, the WPP will produce the same active power as before, while the power that is sent to the grid by the grid side voltage source converter (also referred to as VSC) is much lower. The imbalance in the power may very quickly increase the level of the DC voltage in the HVDC transmission line, because the capacitors in the transmission system (converter capacitors and the cable capacitors) may be the only available energy storage devices. If the imbalance in power is too big, it takes no time for the DC side voltage to rise beyond safe limits and the system to trip off. Subsequently, the LV FRT (low-voltage fault-ride-through) requirements are not met.

There are some techniques presented by different authors on implementing control methods to overcome the problems related to LV FRT for a WPP with a HVDC transmission connection. The choice of control method is affected by the choice of generator and/or converter equipped in each wind turbines of a WPP.

Use of a DC chopper to dissipate energy during LV FRT is presented in some literatures, for example reference [1] see below. A DC chopper can be implemented in a HVDC transmission system irrespective to the type of wind turbines used in the WPP. A DC chopper is placed at the HVDC link close to the grid side VSC. When energy imbalance between the two end-converters occur (due to faults in the grid), the DC link voltage starts to rise. When the HVDC voltage threshold level is crossed, the DC chopper is activated; while the excess of the energy is dissipated into a chopper resistor.

Control of active power production during LV FRT mode by controlling the WPP collector network frequency is presented in reference [2]. The control presented in the literature is based on stall-type wind turbines equipped with induction generators without power converters. The proposed method is such that the WPP collector network frequency is controlled via the WPP side VSC to regulate the power production during the grid side LV faults.

Control of WPP collector network AC voltage is presented in reference [3], based on communication signals between the two end-converters. The power delivered to the grid during the fault is calculated and sent over to the WPP side VSC. With this power reference, a new voltage reference is calculated to achieve controlled voltage drop in the WPP collector network via WPP side VSC. The control technique is mostly focused on wind turbines with doubly-fed induction generators.

Literature references:

[1] Jiang-Häfner, Y., Ottersten, R. (2009), HVDC with Voltage Source Converters - A Desirable Solution for connecting Renewable Energies, 8th International workshop in large-scale integration of wind power into power systems as well as on transmission networks for offshore wind farms

[2] Tanomura, K., Arai, J., Noro, Y., Takagi, K. and Kato, M. (2009), New control for HVDC system connected to large wind-farm. Electrical Engineering in Japan, 166: 31-39. doi: 10.1002/eej.20539

[3] Feltes, C., Wrede, H., Koch, Friedrich;F., Erlich, I. (2008), Fault Ride-Through of DFIG-based Wind Farms connected to the Grid through VSC-based HVDC Link, 16th Power Systems Computation Conference (PSCC 2008)

There may be a need for a method and an apparatus for controlling a DC-transmission link for transmitting electric power from a power production unit to a utility grid, which is in particular applicable during a fault in the utility grid, such as a short circuit involving for example a drop in the AC-voltage at the utility grid. In particular, there may be a need for a method and an apparatus for controlling a DC-transmission link which is more effective and/or simpler in construction than proposed in the prior art.

Summary of the Invention

This need may be met by the subject matter according to the independent claims. Advantageous embodiments of the present invention are described by the dependent claims.

According to an embodiment of the present invention a method for controlling a DC-transmission link (being capable of transmitting electric power over a long distance, such as between 10 km and 500 km, wherein the transmission link in particular comprises an electric cable providing one or more wires the number of wires corresponding to the number of electric phases, the DC-transmission link in particular comprising a first converter, also referred to as AC-DC converter, at a first side and comprising a second converter, in particular also referred to as DC-AC converter, at a second side of the transmission link) for transmitting electric power (in particular DC electric power formed by a direct current and a voltage which are substantially constant, in particular not oscillating with a particular frequency) from a power production unit, in particular a wind turbine (in particular comprising a wind turbine tower, a nacelle mounted on top of the wind turbine tower, a rotor shaft rotatably supported within the nacelle, wherein on one side the rotor shaft is mechanically connected to a generator and wherein on another side the rotor shaft has one or more rotor blades connected to it which are caused to rotate upon impact of wind, wherein in particular the generator of the wind turbine is connected to a wind turbine converter for converting a variable frequency AC power stream or voltage to a fixed frequency AC power stream or voltage, wherein the AC-voltage has a predetermined frequency corresponding for example to 50 Hz or 60 Hz) connected to a AC-DC converter (an electronic/electric component for converting a AC-voltage received from the (at least one) power production unit to a substantially direct current DC-voltage which is utilized for transmitting the electric energy from the first converter of the transmission link to the second converter of the DC-transmission link) at a first side (to which the power production unit is connected, also referred to as the wind tur bine side of the farm side) of the DC-transmission link to a utility grid (providing electric energy to one or more consumers, wherein the energy is in particular provided having a predetermined frequency, such as 50 Hz or 60 Hz) connected to a DC-AC converter (also called a second converter, adapted for converting the DC-voltage to a fixed frequency AC-voltage, wherein the frequency of the AC-voltage and the magnitude of the AC-voltage may be defined by local regulations or a controller of the utility grid) at a second side (also referred to a the grid side) of the DC-transmission link is provided. Thereby, the method comprises obtaining (in particular via a control line, such as an electric control line) a DC-voltage signal (in particular an electrical signal or an optical signal) indicative of a DC-voltage at the DC-transmission link (wherein the DC-voltage may be related to (or may have been measured at) a particular position along the transmission cable of the DC-transmission link, wherein the DC-voltage may have in particular been measured at the particular position of the transmission cable between the first converter and the second converter, wherein in particular during performing the method for controlling the DC-transmission link the DC-voltage may be measured at different positions along the transmission cable of the DC-transmission link, wherein the different positions may differ with respect to their distance to the first converter and the second converter, respectively), and controlling (in particular by supplying a control signal, such as an electrical control signal or an optical control signal, the control signal being in particular the AC-reference voltage of the AC-DC converter) the AC-DC converter (i.e. the first converter which is at the power production unit side of the DC-transmission link) such that a AC-voltage at a AC-side of the AC-DC converter is adjusted based on the DC-voltage signal.

In particular, the AC-voltage at the AC-side of the AC-DC converter may be supplied to the power production unit which in turn may affect power production by the power production unit. Thereby, in particular by controlling the AC-voltage at the AC-side of the AC-DC converter also the power production (in particular an amount of power production) of the power production unit, in particular a wind turbine, may also (indirectly) be controlled.

In particular, the method may be performed during a fault in the utility grid which may involve a voltage drop of the AC-grid voltage, i.e. the AC-voltage at the AC-side of the DC-AC converter (the second converter) of the DC-transmission link. In particular, for increasing DC-voltage the AC-voltage at the AC-side of the AC-DC converter (i.e. the power production unit side) may be adjusted to decrease. Decreasing the AC-voltage at the power production unit side may in turn cause controlling of a power output of the wind turbine, in particular by pitching the rotor blades, speeding up the rotor, reducing the torque on the rotor, etc., as is known in the art.

In particular, the DC-voltage signal may relate to a measurement signal representing a measurement result of measuring the DC-voltage at the DC-transmission link, in particular at a particular position along the transmission cable of the DC-transmission link. In particular, during a fault of the utility grid (and/or after the fault has occurred), the DC-voltage may be measured close to the AC-DC converter (i.e. the first converter). In particular, there may be no communication between the first converter and the second converter required for performing the method. In particular, it may not be required to measure power received at the first converter (from the power production unit) and it may not be required to measure power sent from the second converter (to the utility grid).

Further in particular, the control method may not require adjusting or changing a frequency at the power production unit side or the utility grid side of the DC transmission link. In particular, the frequency of the voltage at the AC-side at the AC-DC converter at the first side may be kept constant during the method. Further in particular, the frequency of the AC-side of the DC-AC converter, i.e. the second converter, of the DC-transmission link may be kept constant during performing the control method.

In particular, the method may be applied or performed during a low-voltage fault-ride-through (LV FRT). A low voltage fault may be present, when a AC-voltage of the utility grid falls below a nominal value at a low voltage side of a grid side transformer.

In particular, plural wind turbines may be connected via respective transformers to a point of common coupling (PCC) within a so-called collector network. In particular, the point of common coupling may be connected to a substation transformer which may transform an energy stream provided by the wind turbine at a voltage of for example 33 kV to a voltage of for example between 80 kV and 150 kV. Alternatively, the substation transformer may be missing. If present, the substation transformer may then be connected to the first converter of the DC-transmission link which may convert the (in particular variable frequency) AC-voltage provided by the plural wind turbines to a substantially constant DC-voltage which allows transmitting the electric energy via the transmission cable of the DC-transmission link to the second converter, i.e. the DC-AC converter at the second side of the DC-transmission link. The second converter then converts the DC-voltage to a fixed frequency AC-voltage at the AC-side of the DC-AC converter.

According to an embodiment of the present invention, the AC voltage at the AC-side of the AC-DC converter controlled to be decreased, if the DC-voltage signal indicates that the DC-voltage at the DC-transmission link exceeds a predetermined threshold. When the DC-voltage at the DC-transmission link exceeds the predetermined threshold, it may indicate that a fault, in particular a voltage drop at the utility grid occurred. In particular, a change rate of the DC-voltage may be measured or obtained and a fault may be identified or determined based on the obtained or measured rate change of the DC-voltage. In other embodiments, a fault may be determined based on a combination of the obtained or measured DC-voltage and the obtained or measured rate change of the DC-voltage. Thereby, a simple manner is provided to detect or determine a fault in the utility grid. In particular, detection or determining the fault in the utility grid may not require measuring or obtaining power received at the first converter or power transferred from the second converter to the utility grid. In particular, the fault in the utility grid may not be required to be detected based on a power unbalance between power received at the first converter and power transmitted or output by the second converter.

According to an embodiment of the present invention, the AC-voltage at the AC-side of the AC-DC converter is the more decreased (i.e. reduced) (or is controlled to be the more decreased) the greater a difference between a DC-voltage at the DC-transmission link and the predetermined threshold is. If the difference between the DC-voltage at the DC-transmission link and the predetermined threshold is large, the AC-voltage at the AC-side of the AC-DC converter is decreased to a higher degree than if the difference between the DC-voltage and the predetermined threshold is small. Thereby, a simple control method may be provided. In particular, the DC-voltage measured or obtained at a particular position along the transmission cable of the DC-transmission link may be an appropriate indication, whether a drop of the voltage of the utility grid has occurred.

According to an embodiment of the present invention, the method further comprises controlling the DC-AC converter (in particular by providing a control signal) at the second side of the DC-transmission link to adopt a current limit mode (a particular operation mode, wherein the current is limited not to leave a particular current range) for limiting a current flowing through the DC-AC converter, if the DC-voltage at the DC-transmission link exceeds the predetermined threshold. In particular, the current limit mode may be a particular operation mode, wherein the converter current is limited not to leave a particular current range to ensure safe operation of the semiconductor devices in the converter system, if the DC-voltage at the DC-transmission link exceeds the predetermined threshold.

In particular, the DC-AC converter may in this case be controlled not to operate according to a constant DC-voltage mode, wherein it kept the DC-voltage of the transmission link constant. In particular, during this situation the DC-voltage may exceed the threshold and may be kept during the fault at a value above the predetermined threshold.

Limiting the current flowing through the DC-transmission link may limit the electric power transmitted from the first converter to the second converter via the transmission link, in particular via the transmission cable, thereby limiting increase of the DC-voltage, thereby protecting components of the transmission link or the whole power generation facility.

According to an embodiment of the present invention, the method further comprises controlling the DC-AC converter at the second side of the DC-transmission link to adopt a constant DC-voltage mode for maintaining the DC-voltage constant at a predetermined nominal DC-voltage (which is in particular smaller than the predetermined threshold), if the DC-voltage at the DC-transmission link is below the predetermined threshold (or close to a nominal DC-voltage). In particular, during this situation, the utility grid may operate in a normal manner without any fault providing a nominal grid AC-voltage. During this situation it may be advantageous to keep the DC-voltage of the DC-transmission link at a constant, in particular relatively high, value to enable an efficient energy transmission. Thereby, transmission losses may be reduced.

According to an embodiment of the present invention, the control method further comprises controlling the AC-DC converter at the first side of the DC-transmission link to adopt a constant AC-voltage mode for maintaining the AC-voltage constant at a predetermined nominal AC-voltage, if the DC-voltage at the DC-transmission link is below the predetermined threshold. In particular, this may occur during a normal operation of the grid, when no fault occurs at the utility grid. In particular, providing a constant AC-voltage at the first side of the DC-transmission link may indicate to the connected power production unit, in particular the wind turbine, to operate in a normal mode, wherein for example the wind turbine supplies a nominal power output. In particular, the nominal output of the wind turbine may also be referred to a rated output of the wind turbine which may be designed for optimized power production. Thereby, in the absence of any fault in the utility grid, the power production unit may be operated in an optimal operation mode, while the transmission loss of the electric power transmission via the DC-transmission link may be reduced, in particular optimized.

In particular, a high DC-current in the transmission link may indicate a large power transmission via the DC-transmission link which may not be balanced with the power discharge from the second converter (to the utility grid). Thereby, increasing the DC-current in the transmission link may indicate that a decrease in the power production of the power production unit is required to balance a power input to the first generator and output from the second generator. If the power balance would not be achieved, the DC-voltage may increase which may be avoided by the control method.

According to an embodiment of the present invention, the AC-voltage at the AC-side of the AC-DC converter is controlled (or adjusted) to be the more decreased the greater the DC-voltage is (in particular an increase of the DC-voltage may result in a even stronger decrease of the DC-current in the transmission link and the AC-voltage at the AC-side of the AC-DC converter is controlled (or adjusted) to be the smaller the smaller the product of the DC-voltage and the DC-current is). In particular, the greater the DC-voltage is, the more severe the fault (in particular grid AC-voltage drop) in the utility grid may be. Further, the greater the DC-voltage is, the more severe the power unbalance between the power input to the first converter and power output from the second converter may be. In order to counteract the power unbalance it may be required to decrease the AC-voltage at the AC-side of the AC-DC converter, in order to cause the power production unit to reduce its power production.

According to an embodiment of the present invention, the AC-voltage at the AC-side of the AC-DC converter is controlled (or adjusted) to be the more decreased the smaller a term is (in particular the AC-voltage at the AC-side of the AC-DC converter is controlled (or adjusted) to be the smaller the smaller the term is or the AC-voltage is controlled to increase with increasing term), wherein the term increases with increasing the DC-voltage, wherein the term increases with increasing the DC-current flowing in the transmission link from the AC-DC converter to the DC-AC converter, wherein the term decreases with increasing AC-current flowing from the power production unit to the DC-transmission link via the AC-DC converter. In particular, the term may be a function of the DC-voltage, the DC-current and the AC-current supplied from power production unit to the first converter.

In particular, the DC-voltage, the DC-current and the AC-current flowing from the power production unit to the AC-DC converter may be input signals to an apparatus for controlling a DC-transmission link according to an embodiment of the present invention. Taking into account these different values which may be obtained, in particular measured, may improve the control method, in particular during a low voltage drop of the AC-voltage of the utility grid.

According to an embodiment of the present invention, the obtained DC-voltage signal indicative of the DC-voltage at the DC-transmission link is based on measuring the DC-voltage closer to the AC-DC converter than to the DC-AC converter (i.e. a measuring position along the transmission cable of the DC-transmission link is spaced apart less from AC-DC converter than from the DC-AC converter), if the DC-voltage is above the threshold. In particular, the DC-voltage measured at different positions along the transmission cable may vary due to an impedance of the transmission cable. In particular, it may be simpler to place a measuring sensor close to the first converter in the case, when the first converter is controlled to adjust its AC-voltage at the AC-side of the first converter. Thereby, extensive and long measuring cables may be avoided. Thereby, an apparatus for controlling a DC-transmission link may be simplified.

According to an embodiment of the present invention, the obtained DC-voltage signal indicative of the DC-voltage at the DC-transmission link is based on measuring the DC-voltage closer to the DC-AC converter (i.e. the second converter) than to the AC-DC converter (i.e. the first converter) (thus a position along the transmission cable of the DC-transmission link at which the DC-voltage is measured is spaced apart less from the DC-AC converter than from the AC-DC converter), if the DC-voltage is below the threshold. In particular, this may be performed during a normal operation of the utility grid, i.e. where no fault occurs. In this normal situation it may be appropriate to monitor the DC-voltage as close as possible to the grid, i.e. as close as possible to the DC-AC converter, i.e. the second converter. Thereby, the method may be more sensitive for monitoring a potential fault of the utility grid. Whenever such a fault has been detected due to measuring that the DC-voltage exceeds the threshold, the method may switch from controlling the second converter and measuring close to the second converter to controlling the first converter and also measuring closer to the first converter. Also both converters may be controlled, wherein each converter receives the DC-voltage signal from a measuring sensor arranged close to it.

In order to achieve a smooth control when switching controlling the second converter at normal operation of the grid to controlling the first converter during a fault at the grid, the transmission impedance of the DC-transmission line or DC-transmission cable may be taken into account, in particular for correcting or calibrating the DC-voltage measured at different positions during different stages of the control method.

According to an embodiment of the present invention, the AC-voltage at the AC-side of the AC-DC converter is adjusted further based on a transmission length and/or transmission impedance of the DC-transmission line. In particular, taking into account the transmission length and/or the transmission impedance of the DC-transmission line or the transmission cable may enable to derive the DC-voltage close to the second converter based on a measurement performed close to the first converter. Thereby, in particular based on the corrected or calibrated DC-voltage, a power unbalance may be derived based on which the AC-voltage at the AC-side of the AC-DC converter may be adjusted, in order to cause the power production unit to reduce its power production, so as to finally achieve a power balance. Thereby, an increase of the DC-voltage may be stopped or at least reduced.

According to an embodiment of the present invention, the method further comprises controlling a power output (in particular comprising an active power output and a reactive power output) of the power production unit, in particular a wind turbine, based on the AC-voltage at the AC-side of the AC-DC converter, wherein in particular the power output decreases for decreasing AC-voltage at the AC-side of the AC-DC converter.

In particular, the wind turbine may comprise a wind turbine converter which may be connected between the wind turbine generator and a wind turbine transformer which may in turn be connected to the point of common coupling. The wind turbine converter may comprise an input terminal for receiving an AC voltage reference which may receive the AC-voltage at the AC-side of the AC-DC converter of the DC-transmission link. The wind turbine converter may be adapted to control a torque of the rotor shaft of the wind turbine based on the AC voltage reference.

In particular, for decreasing AC voltage reference the torque may be reduced for reducing the power output of the wind turbine, thereby accelerating the rotational speed of the rotor shaft. Further, the rotor blade pitch angle may be changed in order to change or adapt an energy transfer from the wind to the rotor blade and thus to the rotor and thus finally to the generator. Other measures may be performed by the wind turbine converter or another control module of the wind turbine to reduce the power output of the wind turbine for decreasing AC voltage reference. In particular, a chopper to dissipate access energy may not be required. Thereby, an efficiency of the power production may be improved.

According to an embodiment of the present invention, the increase of the DC-voltage is caused by a voltage drop, in particular due to a fault, at an AC-side of the DC-AC converter at the second side of the DC-transmission link, wherein the AC-side of the DC-AC converter is connected to the utility grid. In particular, there may be a so-called ground fault, wherein the voltage at the AC-side of the DC-AC converter drops to substantially 0 or to between 0% and 10% of a nominal grid AC voltage. According to another embodiment, the voltage at the AC-side of the AC-DC converter may drop to between 0.5 and 0.9, in particular between 0.6 and 0.8, of the nominal AC voltage at the AC-side of the DC-AC converter of the DC-transmission link. According to an embodiment, the voltage drop may prevail during a time interval between 10 ms and 1000 ms, in particular between 1000 ms and 500 ms.

It should be understood that features (individually or in any combination) disclosed, described, explained or applied to a method for controlling a DC-transmission link may also be applied, used for or provided for an apparatus for controlling a DC-transmission link according to an embodiment of the present invention and vice versa.

According to an embodiment of the present invention an apparatus for controlling a DC-transmission link for transmitting electric power from a power production unit connected to a AC-DC converter at a first side of the DC-transmission link to a utility grid connected to a DC-AC converter at a second side of the DC-transmission link is provided, wherein the apparatus comprises an input terminal (in particular an electric input terminal) for obtaining a DC-voltage signal (in particular an electrical signal) indicative of a DC-voltage at the DC-transmission link; and a control module (in particular comprising a semiconductor chip, program code, a storage for storing the program code, wherein the program code is adapted for performing a control method according to an embodiment of the present invention) for controlling the AC-DC converter such that a AC-voltage at a AC-side of the AC-DC converter is adjusted based on the DC-voltage signal.

In particular, the AC-DC converter may be connected to one or more power production units, in particular wind turbines, to supply the AC-voltage to the power production units, in order to control their power output. In particular, the apparatus may be implemented using existing equipment in that the apparatus is programmed to provide the AC-voltage or a corresponding AC-voltage signal at an output terminal, when the DC-voltage signal is supplied to the apparatus via the input terminal.

According to an embodiment, a power production system comprising the power production unit; the DC-transmission line including the AC-DC converter and the DC-AC converter and the transmission cable; and the apparatus for controlling the DC-transmission link is provided.

Further, the apparatus for controlling the DC-transmission link may comprise another control module (in particular comprising a semiconductor chip, program code, a storage for storing the program code, wherein the program code is adapted for performing a control method according to an embodiment of the present invention) for controlling the DC-AC converter adjusted based on the DC-voltage signal.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments. Elements or components similar in structure and/or function may be labelled with similar reference signs differing only in the first digit.

Fig. 1 schematically illustrates a power production facility including a DC-transmission link which is controlled according to an embodiment of the present invention utilizing an apparatus including a control module and another control module according to an embodiment of the present invention;

Fig. 2 schematically illustrates a wind turbine whose energy production may be controlled, according to an embodiment, upon providing an AC-voltage to a converter of the wind turbine;

Fig. 3 schematically illustrates a portion of the power production facility illustrated in Fig. 1;

Fig. 4 schematically illustrates a control module or an apparatus for controlling a DC-transmission link according to an embodiment of the present invention;

Fig. 5 illustrates graphs depicting properties at the grid side and the farm side, respectively, of the DC-transmission link of the power production facility illustrated in Fig. 1 during performing a method according to an embodiment of the present invention and

Fig. 6 illustrates graphs depicting properties at the grid side and the farm side, respectively, of the DC-transmission link of the power production facility illustrated in Fig. 1 during performing a method according to an embodiment of the present invention.

Detailed Description

The illustration in the drawings is in schematic form.

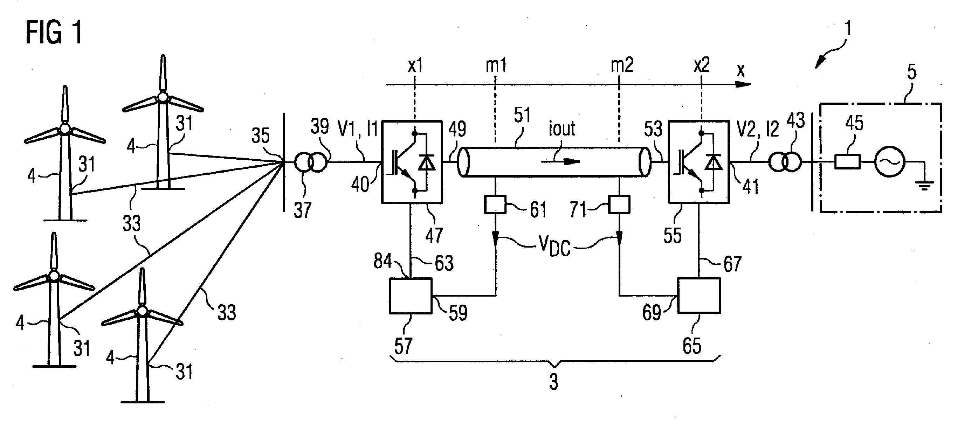

Fig. 1 schematically illustrates a power production facility 1, wherein electric energy generated by a plurality of wind turbines 4 is transmitted via a DC-transmission link 3 to a utility grid 5.

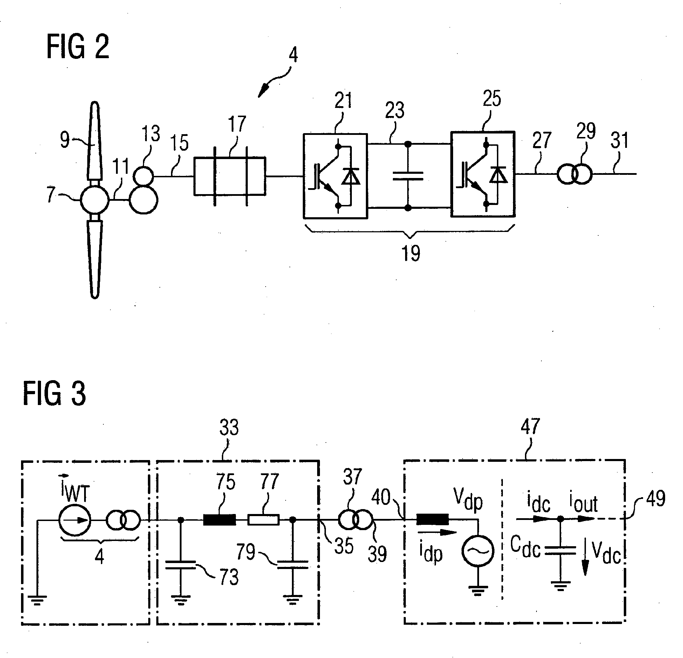

A wind turbine 4 schematically illustrated in Fig. 1 is depicted in further detail in **Fig. 2.** The wind turbine comprises a hub 7 to which two or more rotor blades 9 are connected. The hub is mechanically connected to a rotor shaft 11 which is mechanically connected to a gearbox 13. The gearbox 13 is adapted for adjusting a primary rotational speed with which the rotation shaft 11 rotates to a secondary rotational speed with which the secondary shaft 15 rotates. The secondary shaft 15 is mechanically connected to an electric generator 17 which is in the illustrated example an induction generator. The induction generator 17 outputs upon rotation of the secondary rotation shaft 15 a variable frequency AC-voltage which is supplied to a full-range AC-DC-AC converter 19 which is schematically illustrated.

The converter 19 comprises a AC-DC conversion module 21 which converts the variable frequency AC-voltage to a substantially direct current voltage at the DC-link 23 also comprised in the converter 19. To achieve this, the module 21 comprises a number of semiconductor power switches, in particular isolated gate bipolar transistors (IGBTs) which are controlled regarding their switching by not illustrated gate control circuits which switch the corresponding IGBTs such that at the DC-link 23 substantially a DC-voltage evolves. The DC-voltage of the wind turbine converter 19 is supplied to the DC-AC module 25 comprised in the wind turbine converter 19 which is adapted to convert the substantial DC-voltage of the DC-Link 23 to a fixed frequency AC-voltage at an output terminal 27. In particular, the wind turbine converter 19 may comprise in each of the modules 21 and 25 two IGBTs per phase, in particular six IGBTs in the module 21 and six IGBTs in the module 25, in order to support three electric phases.

Using a wind turbine transformer 29 the fixed frequency AC-voltage provided at the output terminal 27 of the converter 19 is transformed to a higher voltage, such as for example 33 kV.

Referring again to **Fig. 1** the power output terminal 31 of each wind turbine 4 is connected via a power transmission line 33 to a point of common coupling (PCC) 35 at which the power output from the plural wind turbines 4 is summed. The output voltage at the point of common coupling 35 may lie at between 20 kV and 40 kV, for example. Using a substation transformer 37 the AC-voltage at the point of common coupling 35 is further transformed to a higher voltage, such as between 50 kV and 150 kV, for example, at a terminal 39. The power stream provided at the terminal 39 is transmitted via the terminal 40 of the DC-transmission link 3 to a terminal 41, which is connected via a further transformer 43 to the utility grid 5. Schematically illustrated within the utility grid is a load 45 representing one or more consumers. The utility grid 5 is designed to be operated at a particular nominal frequency, such as 50 Hz or 60 Hz, and a particular nominal grid AC voltage.

The DC-transmission link 3 comprises a first converter 47 which is a AC-DC converter and which is adapted for converting the AC-voltage provided at the terminal 40 to a substantially DC-voltage at the terminal 49. The voltage provided at the terminal 40 being provided to the first converter 47 is also denoted as $V_{dp}^{r}$ or V1. The current flowing into the first converter 47 from the terminal 39,40 is also denoted as $i_{dp}$.

The DC-transmission link 3 further comprises a transmission cable 51 for electrically transmitting the power stream provided at the terminal 49 to a terminal 53 to which a second converter 55 is connected. The second converter, a DC-AC converter, is adapted for converting the DC-voltage supplied to the terminal 53 to a fixed frequency AC-voltage V2 which is provided to the output terminal 41 of the second converter 55 also comprised in the DC-transmission link 3.

The first converter 47 as well as the second converter 55 may or may not comprise similar components as the wind turbine converter 19 illustrated in Fig. 2. In particular, the first converter 47, i.e. the AC-DC converter may comprise a first stage similar to the module 21 of the wind turbine converter 19 and further may comprise a second stage similar to the DC-link 23 of the wind turbine converter 19. Thus, functionality of the first converter 47 may be implemented using a number of power semiconductor switches, such as IGBTs.

Similarly, the second converter 55, i.e. the DC-AC converter may be constructed in a similar manner as the DC-Link 23 followed by the module 25 of the wind turbine converter 19. In other embodiments, the first converter 47 and/or the second converter 55 may be constructed using different components and/or a different architecture.

The power production facility 1 illustrated in Fig. 1 further comprises a control module 57 for controlling the DC-transmission link 3. Therefore, the controller 57 receives via an input terminal 59 a DC-voltage signal indicative of the DC-voltage $V_{DC}$ measured by a voltage sensor 61 measuring the DC-voltage at a position m1 along an extension in the direction x of the transmission cable 51. Via a control line 63 the controller 57 supplies a control signal (in particular a AC voltage reference) to the first converter 47, wherein the control signal is based on the DC-voltage signal. Upon receiving the control signal from the controller 57, the converter 47, i.e. the first converter, adjusts its AC-voltage at the terminal 40 to a value $V_{dp}^{r}$ (V1). In particular, such a control method is performed upon detection that the DC-voltage is above a threshold which may in particular occur during a fault in the utility grid 5.

Further, the power production facility 1 comprises another controller 65 or another control module 65 for controlling the second converter 55 via a control line 67. For this purpose, the controller or control module 65 receives via an input terminal 69 a measurement value of the DC-voltage which has been measured by a voltage sensor 71 which measures the DC-voltage at a position m2 along the extension direction x of the extension of the transmission cable 51. In particular, the transmission cable 51 may have a curved extension which still allows defining different positions x along the extension of the transmission cable 51. Based on the measured DC-voltage $V_{DC}$ received via the input terminal 69 the control module 65 determines a control signal and supplies the control signal via the control line 67 to the second converter 55. Based on the control signal the second converter 55 adapts its operation mode, as will be described in further detail below.

**Fig. 3** schematically illustrates a portion of the power production facility 1 illustrated in Fig. 1. The same reference signs in Figs. 1 and 3 denote identical elements. In particular, the transmission lines 33 from each turbine 4 to the point of common coupling 35 are schematically depicted as comprising a capacitor 73, an inductor 75, a resistor 77 and a further capacitor 79 which together provide a particular impedance which may in particular vary from wind turbine to wind turbine depending for example on the transmission length of the respective transmission line 33.

The first converter 47 (which is also illustrated in Fig. 1) which converts the AC-voltage provided at the input terminal 40 to a substantially DC-voltage at the terminal 49 is depicted in a functional diagram, in particular to indicate that the specific implementation of the first converter 47 may be adapted according to requirements of the particular application.

There are many wind turbine configurations available depending upon the generator and the converter type. A standard configuration of a wind turbine may be an induction generator 17 followed by full-range AC-DC-AC converter (back-to-back VSC) 19. Alternatively, the wind turbine may comprise a permanent magnet generator followed by a full-range AC-DC-AC converter. The principle characteristic of such wind turbines with full-range converter may be that they behave as a controlled current source, while responding to the change in collector grid voltage. In particular embodiments of the present invention may be applied to gearless wind turbines, which may still have full-range converters; or to doubly fed wind turbines equipped with LV FRT control.

Specifically, during LV FRT (a fault in the grid 5), the turbine control may be set to limit the active current injection into the collector network at PCC 35. This feature can be actively utilized if the collector network can imitate (or follow) the grid side AC voltage upon the detection of LV faults.

An option according to an embodiment of the invention is to utilize the DC voltage rise during the grid side faults to detect the fault and control the power from the individual wind turbines without any data communication.

The FRT technique of a wind power plant connected via a HVDC line 3 may be based on wind turbines equipped with a full-range AC-DC-AC converter 19.

Each individual wind turbine 4 in a WPP may be connected to a MVAC (medium voltage AC) collector network node 35. In the offshore platform, a park transformer 37 and an AC-DC converter (VSC) 47 is placed followed by a HVDC transmission line 51 and a grid side DC-AC converter (VSC) 55 at the receiving end.

During normal operation the following control is implemented,

- Wind turbines 4 produce active power as determined by the wind speed.

- The wind park (WPP) side AC-DC converter 47 of the HVDC link 3 is set at a constant voltage and frequency. This implies that all the active power produced by the WPP 4 is transmitted to the HVDC link 3.

- The reactive power requirement of the collector network is shared by the WPP side AC-DC converter 47 and the converter 19 in the wind turbines 4. However, individual wind turbines 4 are not set on a voltage control mode, but they are set to product a constant reactive current (pre-calculated as per the requirements of the collector network). This is to avoid any conflicts that may occur when both the WPP side AC-DC converter 47 and the wind turbines are set at voltage control mode.

- The grid side DC-AC converter 55 of the HVDC link 3 controls the DC voltage of the HVDC link.

When the grid undergoes a low voltage fault (voltage below the nominal threshold at the low voltage side of the grid side transformer), the grid side DC-AC converter 55 is set into FRT mode. Upon detection of such a fault, the following control is implemented according to an embodiment:

- The grid side DC-AC converter 55 controls the active current injection into the grid 5, as the reactive current (with the highest priority order during FRT mode) is injected as demanded by the grid code requirements. The active power transfer to the grid is thus reduced and is determined by the level of voltage drop in the grid.

- Consequently the HVDC voltage level will rise. The rate of voltage rise in the HVDC link will be determined by the difference in power between the two end-converters 47,55 and the equivalent capacitance in the HVDC link 3, 51.

- The rise in the HVDC link voltage is monitored (using sensors 61, 71) by the converters 47, 55 at the both ends. When the HVDC voltage rises beyond a threshold value ($V_{th}$), the grid side DC-AC converter relinquishes the DC voltage control and enters the current limit mode. The AC-DC converter 47 at the WPP end switches to DC voltage control mode. The direct HVDC voltage measurements at the WPP end and the grid end converter 55 will not be the same due to HVDC cable 51 resistance and impedance. This difference will need to be addressed to ensure that the exchange of the DC voltage control between the two end converters is smooth.

- The DC voltage control mode of the WPP end AC-DC converter 47 controls the magnitude of the collector network AC voltage V1, which enforces the wind turbines 4 to drop their power production.

- When the voltage V2 at the grid recovers, the normal operation will resume.

As discussed earlier, each individual wind turbines 4 in the wind power plant 1 are based on full-rated back-to-back VSC 19 and thus they can be represented as a current source (see Fig. 3). The total current output is either determined by the wind velocity or the collector network AC voltage V1. This implies that the active power production from the wind power plant can be controlled by controlling the collector network AC voltage V1 during the FRT mode. Voltage control is done via the WPP side VSC 47. The input to the control system 57, 65 is the HVDC link DC voltage, as the rise in the HVDC link voltage $V_{DC}$ indicates the power imbalance in the system due to the grid side fault. Therefore, based on the HVDC voltage $V_{DC}$ rise, a new collector network AC voltage reference V1 is calculated to lower the wind turbine power production.

The grid side voltage support is achieved by a top level controller 65 at the grid side converter 55.

The advantages of having such a control option during LV FRT are summarized below:

A typical wind turbine topology (including the generator and the AC-DC-AC converter) and its control system may not require major modifications or changes should they connect to an HVAC transmission system or a HVDC transmission system.

The system does not need to rely on data communication for cases like FRT control, when very fast and reliable response is required. Rather, the communication of the fault is done via a physical signal (HVDC voltage level in this case).

It may not be necessary to implement two different detection and control techniques for the main grid fault and the WPP collector network fault. During both the cases, wind turbines in the WPP respond according to the change in voltage level in the AC collector grid.

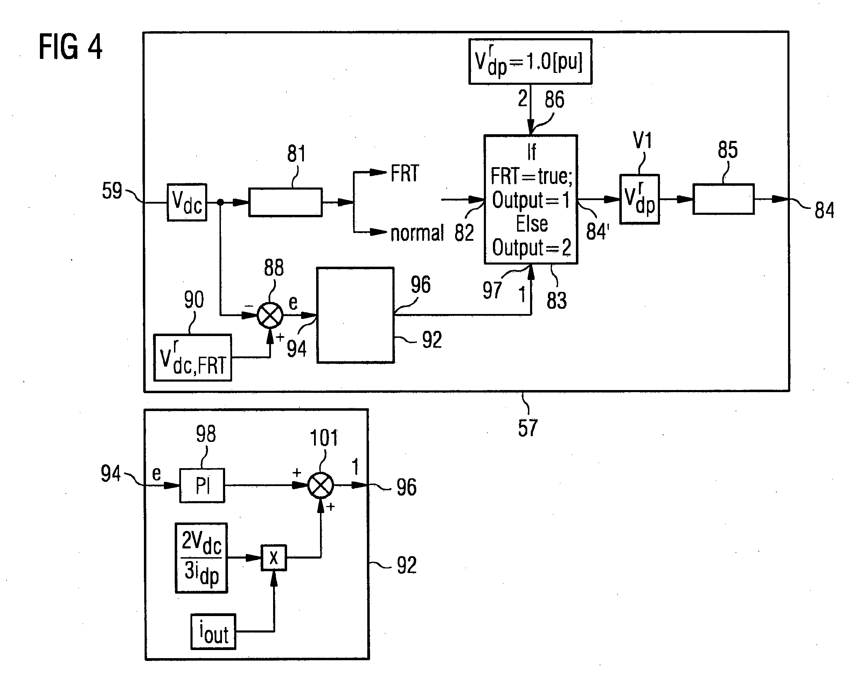

**Fig. 4** schematically illustrates a functional diagram of the control module 57 or controller 57 which is also illustrated in Fig. 1 and which is adapted for controlling the AC-DC converter 47 at the wind park side of the DC-transmission link 3 of the power production facility 1 illustrated in Fig. 1.

At the input terminal 59 the control module 57 receives a DC-voltage signal $V_{DC}$ which is indicative of the DC-voltage $V_{DC}$ at the DC-transmission link 3, in particular at the position m1, where the voltage sensor 61 measures the DC-voltage. As can be seen, the measurement position m1 is closer to the position x1 of the first converter 47 than to the position x2 of the second converter 55.

In a decision/hysteresis block 81 it is decided, whether the DC-voltage $V_{DC}$ exceeds a predetermined threshold $V_{th}$. If this is the case, a result value is set to logical true, indicating that a fault-ride-through (FRT) occurred. If the DC-voltage $V_{DC}$ is below the threshold $V_{th}$, a logical false value is output and provided to the decision block 83. The logical false value is also indicated as "normal" and the logical true value is also indicated as "FRT" in Fig. 4. If an indication of a normal state is received by the decision unit 83 the decision unit 83 outputs at an output terminal 84' the AC-voltage reference $V_{dp}^{r}$ (V1) to the nominal value of 1 pu which is received at the input terminal 86. A modulation element 85 modulates this voltage and provides it to the output terminal 84 of the control module 57 (also indicated in Fig. 1).

The DC-voltage $V_{DC}$ is also provided to an adder element 88 as a negative value, wherein to the adder element 88 also a reference value 90 of the DC-voltage in the case of a fault-ride-through is provided. This reference value in case of a fault is also denoted as reference sign 90. At an output of the adder element 88 an error signal e is provided which is supplied to a sub-control module 92 which is illustrated in further detail in the lower part of Fig. 4. In particular, the error signal is negative, if the DC-voltage $V_{DC}$ is greater than the reference value 90.

The sub-control module 92 comprises an input terminal 94 to which the error signal e is supplied and comprises an output terminal 96 at which an output is provided which is supplied to the decision module 83 via input terminal 97. If the decision/hysteresis module 81 indicates that there is indeed a fault-ride-through (FRT), the decision module 83 provides the output signal of the sub-control module 92 at the output terminal 84 of the decision module 83.

The output of the sub-control module 92 is derived as is illustrated in the lower portion of Fig. 4. In particular, the error signal e supplied to the input terminal 94 of the sub-control module 92 is guided through a PI-element 98 which provides some amplification and integration of the error signal e. The result is supplied to the adder element 101 to which also a result of a multiplication between the term $2V_{DC}/3i_{dp}$ and $i_{out}$ is provided. In fact, $V_{DC}$ and may $i_{out}$ be interrelated and may depend on each other. Assuming that the power produced by the wind farm is constant during the process, the incoming DC power may be constant, while the power transmitted to the grid may be reduced due to a fault. The excess of energy may thus have to be stored in the capacitors along the transmission line (capacitors of the converters and capacitors of the cables). While the $V_{DC}$ increases, $i_{out}$ may drop. When the power balance is achieved again, the DC voltage is maintained at a constant value The adder element 101 outputs a signal which is supplied to the output terminal 96 of the sub-control module 92.

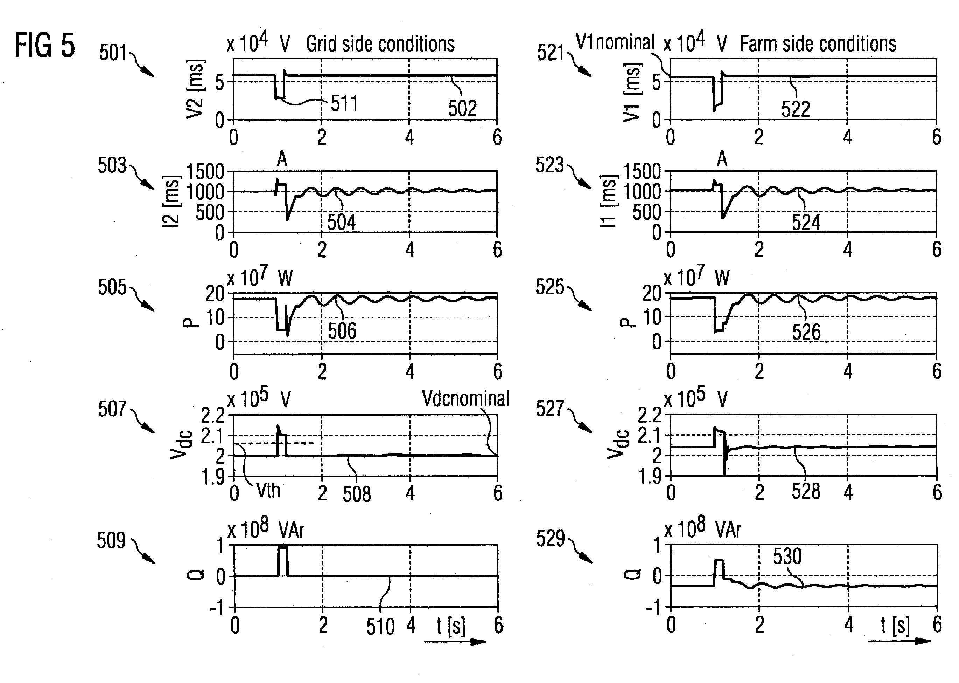

**Fig. 5** illustrates on the left-hand side electrical properties measured or obtained at or close to the second converter 55 illustrated in Fig. 1 and on the right-hand side electrical properties at or close to the first converter 47 illustrated in Fig. 1.

In particular, all graphs have as an abscissa the time t measured in seconds s. Further, the graph 501 illustrates the AC-voltage V1 (curve 502), the graph 503 illustrates the current I1 (curve 504), the graph 505 illustrates the power P (curve 506), the graph 507 illustrates the DC-voltage (curve 508) and the graph 509 illustrates the reactive power (curve 510) as measured at the terminal 40 of the first converter 47 and/or as measured with the voltage sensor 61 illustrated in Fig. 1.

As can be seen from graph 507 the DC-voltage raises above the nominal value $V_{nominal}$ and above a threshold $V_{th}$. At the same time (or previously) it is obvious from graph 501 that a voltage drop of the voltage V2 at the grid 5 occurred, in this case due to a fault. As is further obvious from Fig. 505 the power delivered to the grid falls due to the fault. In the illustrated case the grid 5 is subjected to a three phase voltage dip of 0.7 pu for 200 ms.

Since the DC-voltage $V_{DC}$ is above the threshold $V_{th}$ a logical true value is derived by the decision/hysteresis element 81 illustrated in Fig. 4 such that the decision element 83 outputs at its output terminal 84 an adjusted AC-voltage reference $V_{dp}{}^r$ (V1) (different form the nominal value of 1 pu) and provides it to the first converter 47.

On the right-hand side Fig. 5 illustrates the plots 521 showing the voltage V1 as a curve 522, the graph 523 showing as a curve 524 the current I1, a graph 525 showing as a curve 526 the power P, showing the graph 527 as a curve 528 the DC-voltage at the position m1 illustrated in Fig. 1 and showing in graph 529 as a curve 530 the reactive power at the farm side of the DC-transmission link 3.

As soon as the FRT has been detected, the first converter 47 is controlled by the control module 57 such that the first converter 47 outputs at its terminal 40 a decreased AC-voltage V1 as is indicated in graph 521 as curve 522, wherein the output voltage is also labelled as V1. In particular, the controller illustrated in Fig. 4 tries the power curve 526 illustrated in graph 525 to mirror the power curve 506 illustrated in graph 505. Thereby, the impedance of the transmission cable 51 between the first converter 47 and the second converter 55 is taken into account. As can be seen, due to the controlling, the DC-voltage $V_{DC}$ does not increase indefinitely but is kept within save limits, in order to avoid damage of components of the transmission link 3.

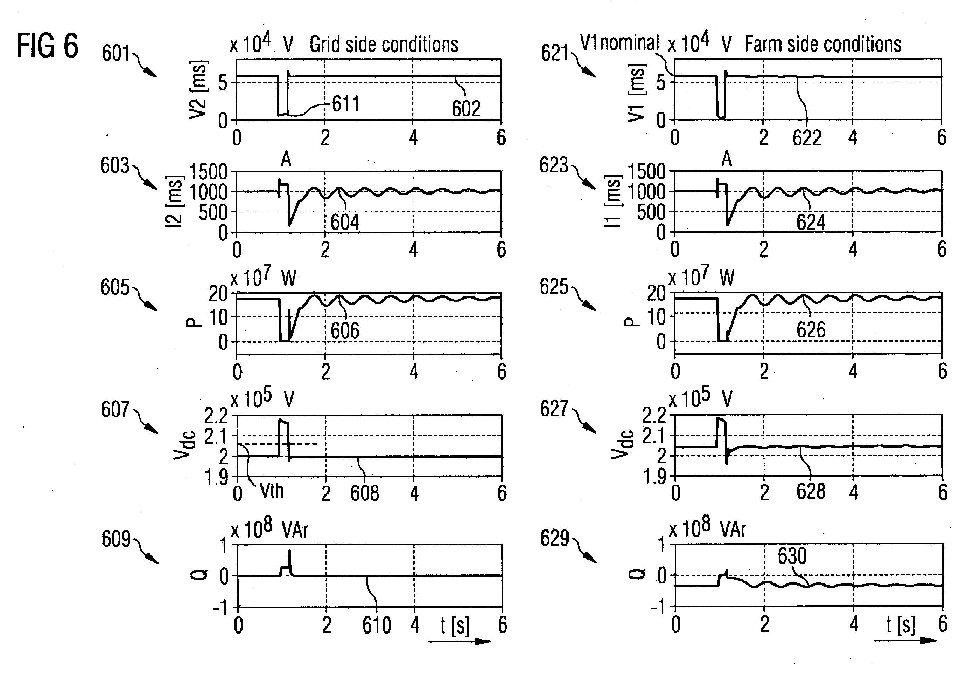

**Fig. 6** illustrates graphs corresponding to the graphs illustrated in Fig. 5, wherein the case is indicated, when the grid subjected to a three phase solid line to ground fault for 200 ms. Similar or identical graphs or curves in Figs. 5 and 6 are labelled with reference signs which differ only in the first digit.

During normal operating condition, the level of collector network AC voltage is set equal to its 1 [pu] value. Whereas new reference values are calculated on the basis of HVDC voltage rise when operating at the FRT mode. For example, when the main grid undergoes a solid line to ground fault (see Fig. 6), the export of active power P is non-existing. The HVDC link voltage will suddenly rise (beyond the threshold value), and the control switch-over takes place between the two end-converters 47, 55. The DC voltage reference value is set at $V_{dc,FRT}^r$ during FRT mode, which is higher than the reference DC voltage during the normal situation.

The controller(s) 57, 65 keeps the HVDC link voltage below the safe limits by lowering the power from the wind power plant but it can not necessarily bring it down to the reference value set for FRT mode ($V_{dc,FRT}^r$). The only way to lower the HVDC voltage is to export the power out to the grid or decrease the input WPP power further down. These options are not available during a complete short circuit in the main grid. The implemented controller 57 may consist of only the proportional gain. This means that the error signal e between the measured DC voltage and the reference may retain a non-zero value. But the objectives of a FRT control are, nevertheless, achieved (Fig.6). The results presented for the grid side conditions are taken at the low voltage side of the grid side transformer. The control system diagram is presented in Fig. 4.

In Fig 4, $V_{dc}$ is the measured DC voltage, $V_{dp}^r$ is the reference direct axis collector network voltage, $i_{dp}$ is the measured AC side direct axis current and $i_{out}$ is the measured DC output current, refer Figs. 1, 3.

If the location of the fault is far from the point of grid connection, the effect is seen as a network voltage dip by the grid side converter. In such a situation, the WPP will transmit some power (depending upon the level of voltage dip). An example case is presented in Fig 5. In this case, the HVDC voltage is clamped close to the reference value ( $V_{dc,FRT}^r$ ) during FRT mode by the controller. The control system, hereby, maintains the HVDC voltage level during different fault cases and the FRT criterion are fulfilled.

The controller illustrated in Fig. 4 may take into account a power balance equation as follows:

$$v_{dp}^r(n) = \frac{2}{3} \cdot \frac{v_{dc}(n)}{i_{dp}(n)} \cdot \frac{C_{dc}}{T_s} \cdot (v_{dc,FRT}^r(n) - v_{dc}(n)) + \frac{2}{3} \cdot \frac{v_{dc}(n)}{i_{dp}(n)} \cdot i_{out}(n)$$

Where, $T_s$ is the sampling time.

Superscript 'r' represents the reference values.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for controlling a DC-transmission link (3) for transmitting electric power from a power production unit (4) connected to a AC-DC converter (47) at a first side of the DC-transmission link (3) to a utility grid (5) connected to a DC-AC converter (55) at a second side of the DC-transmission link (3), the method comprising:

   obtaining a DC voltage signal (Vdc) indicative of a DC voltage at the DC transmission link (3);
   controlling the AC-DC converter (47) such that an AC voltage (V1) at a AC side (40) of the AC-DC converter (47) is adjusted based on the DC voltage signal (Vdc), wherein the AC voltage (V1) at the AC side of the AC-DC converter (47) is decreased, if the DC voltage signat (Vdc) indicates that the DC vottage at the DC transmission link (3) exceeds a predetermined threshold (Vth), and wherein the AC voltage (V1) at the AC side of the AC-DC converter is adjusted to amount to:

   ```
   Vth - Vdc + 2 * Vdc * iout/(3 * idp),
   ```

   wherein

   Vdc is the DC-voltage at the DC transmission link;
   Vth is the predetermined threshold;
   iout is the DC current flowing in the transmission link from the AC-DC converter to the DC-AC converter (55); and
   idp is the AC current flowing from the power production unit to the DC-transmission link (3) via the AC-DC converter (47).

2. Method according to claim 1, further comprising:

   controlling the DC-AC converter (55) at the second side of the DC-transmission link (3) to adopt a DC current limit mode for limiting a DC current (iout) flowing through the DC-AC converter, if the DC voltage (Vdc) at the DC transmission link exceeds the predetermined threshold (Vth).

3. Method according to one of claims 1 to 2, further comprising:

   controlling the DC-AC converter (55) at the second side of the DC-transmission link (3) to adopt a constant DC voltage mode for maintaining the DC voltage constant at a predetermined nominal DC voltage (Vdcnominal), if the DC voltage at the DC transmission link is below the predetermined threshold (Vth).

4. Method according to one of claims 1 to 3, further comprising:

   controlling the AC-DC converter (47) at the first side of the DC-transmission link to adopt a constant AC voltage mode for maintaining the AC voltage constant at a predetermined nominal AC voltage (V1nominal), if the DC voltage at the DC transmission link is below the predetermined threshold (Vth).

5. Method according to one of claims 1 to 4, wherein the obtained DC voltage signal indicative of the DC voltage at the DC transmission link is based on measuring the DC voltage closer to the AC-DC converter (47) than to the DC-AC converter (55), if the DC voltage is above the threshold (Vth).

6. Method according to one of claims 1 to 5, wherein the obtained DC voltage signal indicative of the DC voltage at the DC transmission link is based on measuring the DC voltage closer to the DC-AC converter (55) than to the AC-DC converter (47), if the DC voltage is below the threshold (Vth).

7. Method according to one of the preceding claims, wherein the AC voltage at the AC side of the AC-DC converter is adjusted further based on a transmission length and/or transmission impedance of the DC transmission line (51).

8. Method according to one of the preceding claims, further comprising controlling a power output of the power production unit (5) based on the AC voltage (V1) at the AC side of the AC-DC converter, wherein in particular the power output decreases for decreasing AC voltage at the AC side of the AC-DC converter.

9. Method according to one of preceding claims, wherein the increase of the DC voltage is caused by a voltage drop (511,611), in particular due to a fault, at a AC side of the DC-AC converter (55) at the second side of the DC-transmission link (3), wherein the AC side (41) of the DC-AC converter is connected to the utility grid (5).

10. Apparatus (1) for controlling a DC-transmission link (3) for transmitting electric power from a power production unit (4) connected to a AC-DC converter (47) at a first side of the DC-transmission link (3) to a utility grid (5) connected to a DC-AC converter (55) at a second side of the DC-transmission link (3), wherein the apparatus comprises:

an input terminal (59) for obtaining a DC voltage signal indicative of a DC voltage at the DC transmission link;
a control module (57) for controlling the AC-DC converter (47) such that a AC voltage (V1) at a AC side (40) of the AC-DC converter (47) is adjusted based on the DC voltage signal (Vdc),

wherein the apparatus (1) is further adapted to decrease the AC voltage (V1) at the AC side of the AC-DC converter (47), if the DC to decrease the AC voltage (V1) at the AC side of the AC-DC converter (47), if the DC voltage signal ( Vdc ) indicates that the DC voltage at the DC transmission link ( 3 ) exceeds a predetermined threshold ( Vth ), and to adjust the AC voltage (V1) at the AC side of the AC-DC converter to amount to:

```
Vth – Vdc + 2 * Vdc * iout/(3 * idp),
```

wherein

Vdc is the DC-voltage at the DC transmission link (3);
Vth is the predetermined threshold;
iout is the DC current flowing in the transmission link (3) from the AC-DC converter to the DC-AC converter (55); and
idp is the AC current flowing from the power production unit to the DC-transmission link (3) via the AC-DC converter (47).

**Patentansprüche**

1. Verfahren zur Steuerung einer DC-Übertragungsstrecke (3) zum Übertragen von elektrischer Energie von einer Stromerzeugungseinheit (4), die mit einem AC/DC-Wandler (47) auf einer ersten Seite der DC-Übertragungsstrecke (3) verbunden ist, zu einem Versorgungsnetz (5), das mit einem DC/AC-Wandler (55) auf einer zweiten Seite der DC-Übertragungsstrecke (3) verbunden ist, wobei das Verfahren umfasst:

Gewinnen eines Gleichspannungssignals (Vdc), das eine Gleichspannung an der DC-Übertragungsstrecke (3) anzeigt;
Steuern des AC/DC-Wandlers (47) derart, dass eine Wechselspannung (V1) auf einer Wechselspannungsseite (40) des AC/DC-Wandlers (47) auf der Basis des Gleichspannungssignals (Vdc) eingestellt wird,

wobei die Wechselspannung (V1) auf der Wechselspannungsseite des AC/DC-Wandlers (47) verringert wird, wenn das Gleichspannungssignal (Vdc) anzeigt, dass die Gleichspannung an der DC-Übertragungsstrecke (3) einen vorbestimmten Schwellenwert (Vth) überschreitet, und

wobei die Wechselspannung (V1) auf der Wechselspannungsseite des AC/DC-Wandlers so eingestellt wird, dass sie

$$Vth - Vdc + 2 * Vdc * iout/(3 * idp)$$

beträgt, wobei

Vdc die Gleichspannung an der DC-Übertragungsstrecke ist;
Vth der vorbestimmte Schwellenwert ist;
iout der in der Übertragungsstrecke von dem AC/DC-Wandler zu dem DC/AC-Wandler (55) fließende Gleichstrom ist; und
idp der von der Stromerzeugungseinheit über den AC/DC-Wandler (47) zu der DC-Übertragungsstrecke (3) fließende Wechselstrom ist.

2. Verfahren nach Anspruch 1, welches ferner umfasst:

Steuern des DC/AC-Wandlers (55) auf der zweiten Seite der DC-Übertragungsstrecke (3), sodass er in einer Gleichstrombegrenzungs-Betriebsart zum Begrenzen eines durch den DC/AC-Wandler fließenden Gleichstroms (iout) arbeitet, falls die Gleichspannung (Vdc) an der DC-Übertragungsstrecke den vorbestimmten Schwellenwert (Vth) überschreitet.

3. Verfahren nach einem der Ansprüche 1 bis 2, welches ferner umfasst:

Steuern des DC/AC-Wandlers (55) auf der zweiten Seite der DC-Übertragungsstrecke (3), sodass er in einer Betriebsart konstanter Gleichspannung zum Konstanthalten der Gleichspannung bei einer vorbestimmten Nenngleichspannung (Vdcnominal) arbeitet, falls die Gleichspannung an der DC-Übertragungsstrecke unter dem vorbestimmten Schwellenwert (Vth) liegt.

4. Verfahren nach einem der Ansprüche 1 bis 3, welches ferner umfasst:

Steuern des AC/DC-Wandlers (47) auf der ersten Seite der DC-Übertragungsstrecke, sodass er in einer Betriebsart konstanter Wechselspannung zum Konstanthalten der Wechselspannung bei einer vorbestimmten Nennwechselspannung (V1nominal) arbeitet, falls die Gleichspannung an der DC-Übertragungsstrecke unter dem vorbestimmten Schwellenwert (Vth) liegt.

5. Verfahren nach einem der Ansprüche 1 bis 4, wobei das gewonnene Gleichspannungssignal, das die Gleichspannung an der DC-Übertragungsstrecke anzeigt, auf einer Messung der Gleichspannung näher an dem AC/DC-Wandler (47) als an dem DC/AC-Wandler (55) basiert, falls die Gleichspannung über dem Schwellenwert (Vth) liegt.

6. Verfahren nach einem der Ansprüche 1 bis 5, wobei das gewonnene Gleichspannungssignal, das die Gleichspannung an der DC-Übertragungsstrecke anzeigt, auf einer Messung der Gleichspannung näher an dem DC/AC-Wandler (55) als an dem AC/DC-Wandler (47) basiert, falls die Gleichspannung unter dem Schwellenwert (Vth) liegt.

7. Verfahren nach einem der vorhergehenden Ansprüche, wobei die Wechselspannung auf der Wechselspannungsseite des AC/DC-Wandlers ferner auf der Basis einer Übertragungslänge und/oder Übertragungsimpedanz der DC-Übertragungsleitung (51) eingestellt wird.

8. Verfahren nach einem der vorhergehenden Ansprüche, welches ferner das Steuern einer Leistungsabgabe der Stromerzeugungseinheit (5) auf der Basis der Wechselspannung (V1) auf der Wechselspannungsseite des AC/DC-Wandlers umfasst, wobei sich insbesondere die Leistungsabgabe für eine sich verringernde Wechselspannung auf der Wechselspannungsseite des AC/DC-Wandlers verringert.

9. Verfahren nach einem der vorhergehenden Ansprüche, wobei die Erhöhung der Gleichspannung durch einen Spannungsabfall (511, 611), insbesondere infolge eines Fehlers, auf einer Wechselspannungsseite des DC/AC-Wandlers (55) auf der zweiten Seite der DC-Übertragungsstrecke (3) verursacht wird, wobei die Wechselspannungsseite (41) des DC/AC-Wandlers mit dem Versorgungsnetz (5) verbunden ist.

**10.** Vorrichtung (1) zur Steuerung einer DC-Übertragungsstrecke (3) zum Übertragen von elektrischer Energie von einer Stromerzeugungseinheit (4), die mit einem AC/DC-Wandler (47) auf einer ersten Seite der DC-Übertragungsstrecke (3) verbunden ist, zu einem Versorgungsnetz (5), das mit einem DC/AC-Wandler (55) auf einer zweiten Seite der DC-Übertragungsstrecke (3) verbunden ist, wobei die Vorrichtung umfasst:

eine Eingangsklemme (59) zum Gewinnen eines Gleichspannungssignals, das eine Gleichspannung an der DC-Übertragungsstrecke anzeigt;
ein Steuermodul (57) zum Steuern des AC/DC-Wandlers (47) derart, dass eine Wechselspannung (V1) auf einer Wechselspannungsseite (40) des AC/DC-Wandlers (47) auf der Basis des Gleichspannungssignals (Vdc) eingestellt wird, wobei die Vorrichtung (1) ferner dazu eingerichtet ist, die Wechselspannung (V1) auf der Wechselspannungsseite des AC/DC-Wandlers (47) zu verringern, wenn das Gleichspannungssignal (Vdc) anzeigt, dass die Gleichspannung an der DC-Übertragungsstrecke (3) einen vorbestimmten Schwellenwert (Vth) überschreitet, und
die Wechselspannung (V1) auf der Wechselspannungsseite des AC/DC-Wandlers so einzustellen, dass sie

$$Vth - Vdc + 2 * Vdc * iout/(3 * idp)$$

beträgt, wobei

Vdc die Gleichspannung an der DC-Übertragungsstrecke (3) ist;
Vth der vorbestimmte Schwellenwert ist;
iout der in der Übertragungsstrecke (3) von dem AC/DC-Wandler zu dem DC/AC-Wandler (55) fließende Gleichstrom ist; und
idp der von der Stromerzeugungseinheit über den AC/DC-Wandler (47) zu der DC-Übertragungsstrecke (3) fließende Wechselstrom ist.

**Revendications**

**1.** Un procédé de commande d'une liaison de transmission CC (3) pour la transmission de courant électrique provenant d'une unité de production de courant (4) raccordée à un convertisseur CA-CC (47) au niveau d'un premier côté de la liaison de transmission CC (3) vers un réseau de distribution public (5) raccordé à un convertisseur CC-CA (55) au niveau d'un deuxième côté de la liaison de transmission CC (3), le procédé comprenant :

l'obtention d'un signal de tension CC (Vdc) indicatif d'une tension CC au niveau de la liaison de transmission CC (3),
la commande du convertisseur CA-CC (47) de sorte qu'une tension CA (V1) au niveau d'un côté CA (40) du convertisseur CA-CC (47) soit ajustée en fonction du signal de tension CC (Vdc),
dans lequel la tension CA (V1) au niveau du côté CA du convertisseur CA-CC (47) est diminuée si le signal de tension CC (Vdc) indique que la tension CC au niveau de la liaison de transmission CC (3) dépasse un seuil prédéterminé (Vth), et
dans lequel la tension CA (V1) au niveau du côté CA du convertisseur CA-CC est ajustée de façon à correspondre à :

$$Vth - Vdc + 2 * Vdc * iout/(3 * idp),$$

où

Vdc est la tension CC au niveau de la liaison de transmission CC,
Vth est le seuil prédéterminé,
iout est le courant CC circulant dans la liaison de transmission du convertisseur CA-CC au convertisseur CC-CA (55),
idp est le courant CA s'écoulant de l'unité de production de courant vers la liaison de transmission CC (3) par l'intermédiaire du convertisseur CA-CC (47).

**2.** Le procédé selon la revendication 1, comprenant en outre :

la commande du convertisseur CC-CA (55) au niveau du deuxième côté de la liaison de transmission CC (3) de façon à adopter un mode de limitation de courant CC destiné à limiter un courant CC (iout) circulant au travers du convertisseur CC-CA si la tension CC (Vdc) au niveau de la liaison de transmission CC dépasse le seuil prédéterminé (Vth).

**3.** Le procédé selon l'une quelconque des revendications 1 à 2, comprenant en outre :

la commande du convertisseur CC-CA (55) au niveau du deuxième côté de la liaison de transmission CC (3) de façon à adopter un mode de tension CC constante destiné à maintenir la tension CC constante à une tension CC nominale prédéterminée (Vdcnominal) si la tension CC au niveau de la liaison de transmission CC se situe sous le seuil prédéterminé (Vth).

**4.** Le procédé selon l'une quelconque des revendications 1 à 3, comprenant en outre :

la commande du convertisseur CA-CC (47) au niveau du premier côté de la liaison de transmission CC de façon à adopter un mode de tension CA constante destiné à maintenir la tension CA constante à une tension CA nominale prédéterminée (v1nominal) si la tension CC au niveau de la liaison de transmission CC se situe sous le seuil prédéterminé (Vth).

**5.** Le procédé selon l'une quelconque des revendications 1 à 4, dans lequel le signal de tension CC obtenu indicatif de la tension CC au niveau de la liaison de transmission CC est basé sur la mesure de la tension CC plus près du convertisseur CA-CC (47) que du convertisseur CC-CA (55) si la tension CC est supérieure au seuil (Vth).

**6.** Le procédé selon l'une quelconque des revendications 1 à 5, dans lequel le signal de tension CC obtenu indicatif de la tension CC au niveau de la liaison de transmission CC est basé sur la mesure de la tension CC plus près du convertisseur CC-CA (55) que du convertisseur CA-CC (47) si la tension CC se situe sous le seuil (Vth).

**7.** Le procédé selon l'une quelconque des revendications précédentes, dans lequel la tension CA au niveau du côté CA du convertisseur CA-CC est ajustée en outre en fonction d'une durée de transmission et/ou d'une impédance de transmission de la ligne de transmission CC (51).

**8.** Le procédé selon l'une quelconque des revendications précédentes, comprenant en outre la commande d'une production de courant de l'unité de production de courant (5) en fonction de la tension CA (V1) au niveau du côté CA du convertisseur CA-CC, dans lequel en particulier la production de courant diminue pour une tension CA décroissante au niveau du côté CA du convertisseur CA-CC.

**9.** Le procédé selon l'une quelconque des revendications précédentes, dans lequel l'accroissement de la tension CC est provoquée par une chute de tension (511, 611), en particulier du fait d'une défaillance, au niveau d'un côté CA du convertisseur CC-CA (55) au niveau du deuxième côté de la liaison de transmission CC (3), le côté CA (41) du convertisseur CC-CA étant raccordé au réseau de distribution public (5).

**10.** Un appareil (1) destiné à commander une liaison de transmission CC (3) pour la transmission d'un courant électrique d'une unité de production de courant (4) raccordée à un convertisseur CA-CC (47) au niveau d'un premier côté de la liaison de transmission CC (3) vers un réseau de distribution public (5) raccordé à un convertisseur CC-CA (55) au niveau d'un deuxième côté de la liaison de transmission CC (3), l'appareil comprenant :

une borne d'entrée (59) pour l'obtention d'un signal de tension CC indicatif d'une tension CC au niveau de la liaison de transmission CC,
un module de commande (57) destiné à commander le convertisseur CA-CC (47) de sorte qu'une tension CA (V1) au niveau d'un côté CA (40) du convertisseur CA-CC (47) soit ajustée en fonction du signal de tension CC (Vdc),
l'appareil (1) étant adapté en outre de façon à diminuer la tension CA (V1) au niveau du côté CA du convertisseur CA-CC (47) si le signal de tension CC (Vdc) indique que la tension CC au niveau de la liaison de transmission CC (3) dépasse un seuil prédéterminé (Vth), et de façon à ajuster la tension CA (V1) au niveau du côté CA du convertisseur CA-CC de façon à correspondre à :

```
Vth – Vdc + 2 * Vdc * iout/(3 * idp),
```

où

Vdc est la tension CC au niveau de la liaison de transmission CC (3),
Vth est le seuil prédéterminé,
iout est le courant CC circulant dans la liaison de transmission (3) du convertisseur CA-CC au convertisseur CC-CA (55), et
idp est le courant CA circulant de l'unité de production de courant à la liaison de transmission CC (3) par l'intermédiaire du convertisseur CA-CC (47).

```
Vth – Vdc + 2 * Vdc * iout/(3 * idp),
```

FIG 1

EP 2 528 184 B1

FIG 2

FIG 3

FIG 4

# FIG 5

FIG 6

EP 2 528 184 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANG-HÄFNER, Y. ; OTTERSTEN, R.** HVDC with Voltage Source Converters - A Desirable Solution for connecting Renewable Energies. *8th International workshop in large-scale integration of wind power into power systems,* 2009
- **TANOMURA, K. ; ARAI, J. ; NORO, Y. ; TAKAGI, K. ; KATO, M.** New control for HVDC system connected to large wind-farm. *Electrical Engineering in Japan,* 2009, vol. 166, 31-39

- **FELTES, C. ; WREDE, H. ; KOCH, FRIEDRICH;F. ; ERLICH, I.** Fault Ride-Through of DFIG-based Wind Farms connected to the Grid through VSC-based HVDC Link. *16th Power Systems Computation Conference (PSCC 2008),* 2008